# EUROPEAN PATENT SPECIFICATION

(11) **EP 3 516 310 B1**
(45) Date of publication and mention of the grant of the patent: **04.05.2022**
(21) Application number: 17784402.4
(22) Date of filing: 21.09.2017
(51) Int. Cl.: F24T 10/17, F24T 10/00

(54) **COAXIAL GEOTHERMAL PROBE AND METHOD FOR MAKING A COAXIAL GEOTHERMAL PROBE**
KOAXIALE ERDWÄRMESONDE UND VERFAHREN ZUR HERSTELLUNG EINER KOAXIALEN ERDWÄRMESONDE
SONDE GÉOTHERMIQUE COAXIALE ET PROCÉDÉ DE FABRICATION D'UNE SONDE GÉOTHERMIQUE COAXIALE

(30) Priority: 23.09.2016 IT 201600095972
(43) Date of publication of application: 31.07.2019
(73) Proprietor: Nordwind S.r.l., 37021 Bosco Chiesanuova (VR) (IT)
(72) Inventor: CANTERI, Renato, 37021 Bosco Chiesanuova VR (IT)
(74) Representative: Ponchiroli, Simone
(86) International application number: PCT/IB2017/055719
(87) International publication number: WO 2018/055538

(56) References cited:
- EP-A1- 3 086 055
- EP-A2- 2 060 860
- WO-A1-2010/104835
- WO-A1-2012/050454
- SK-U1- 500 352 015
- US-A1- 2013 087 306

## Description

This invention relates to a coaxial geothermal probe and a method for making it.

It is known that one of the main components of geothermal heating plants is the so-called geothermal probe, which is just a pipe having an inlet and an outlet and which is intended to be inserted in the ground.

Of the various types of prior art geothermal probes, the coaxial type are constituted of two coaxial pipes that between them form an annular chamber and that are intended to be vertically installed in the ground. In particular, the outer pipe has a capped lower end, whilst the lower end of the inner pipe is at a slight distance from the lower end of the outer pipe, so that it is in fluid communication with the annular chamber. In use, the carrier fluid arriving from the heat pump is fed to the inner pipe, flows all the way through it, then returns towards the heat pump along the annular chamber, exchanging heat with the ground.

At present, the only known method for making coaxial geothermal probes comprises making a hole in the ground, inserting the outer pipe in it, filling any spaces between the outer pipe and the inner walls of the hole, and inserting the inner pipe in the outer pipe.

However, this prior art technology has several disadvantages, above all in economic terms. In fact, the need to make relatively long (usually around 100 to 200 metres) vertical boreholes means that the costs of making the probes is such that it renders the probes not economically viable, especially if the geothermal heating plant must be coupled with buildings that have low energy consumption.

EP 2060860 A2 describes a geo-thermal probe and method of installing it. According to this document, the probe is inserted into the ground by mounting a drilling head to the lower end of the outer tube of the probe and by drilling the drilling head into the soil by means of a rotary percussion drilling device, so creating the bore for housing the probe.

WO 2012/050454 discloses a device for heat exchange in a drainage system, in particular to be used for heat exchange on a building and construction site for thawing frozen drainage systems. The heat exchange comprises an external pipe device and an internal pipe device. Both the internal pipe device and the external pipe device can be made of a rigid or a flexible material. According to WO 2012/050454 the device is places within the drainage system by pushing it down into openings in the ground or into a mass (for example gravel, sand, crushed stones etc.).

Document US 2013/087306 discloses a method for making coaxial geothermal probes according to which the hollow outer pipe comprises a head element provided with a driving head, in one embodiment of which the head element is drive into the ground without soil removal, by applying an axial thrust to it that is generated by means of any of post driver, sledge hammer, jackhammer, hydraulic rams, compressed air post drivers or propane powered percussive hammers. In this context, the technical purpose which forms the basis of this invention is to provide a coaxial geothermal probe and a method for making it which overcome the above-mentioned disadvantages.

In particular, the technical purpose of this invention is to provide a coaxial geothermal probe and a method for making it which have production costs notably lower than the prior art probes.

The technical purpose specified and the aims indicated are substantially achieved by a coaxial geothermal probe and a method for making it, as described in the appended claims.

Further features and the advantages of this invention are more apparent in the detailed description, with reference to the accompanying drawings which illustrate several preferred, non-limiting embodiments of a coaxial geothermal probe and a method for making it, in which:
- Figure 1 is a schematic side view of a head element 13 that is part of an outer pipe of the probe according to this invention;
- Figure 2 is an axial section of the head element 13 of Figure 1;
- Figure 3 is a schematic side view of a second element that is part of an outer pipe of the probe according to this invention;
- Figure 4 is an axial section of the second element of Figure 3;

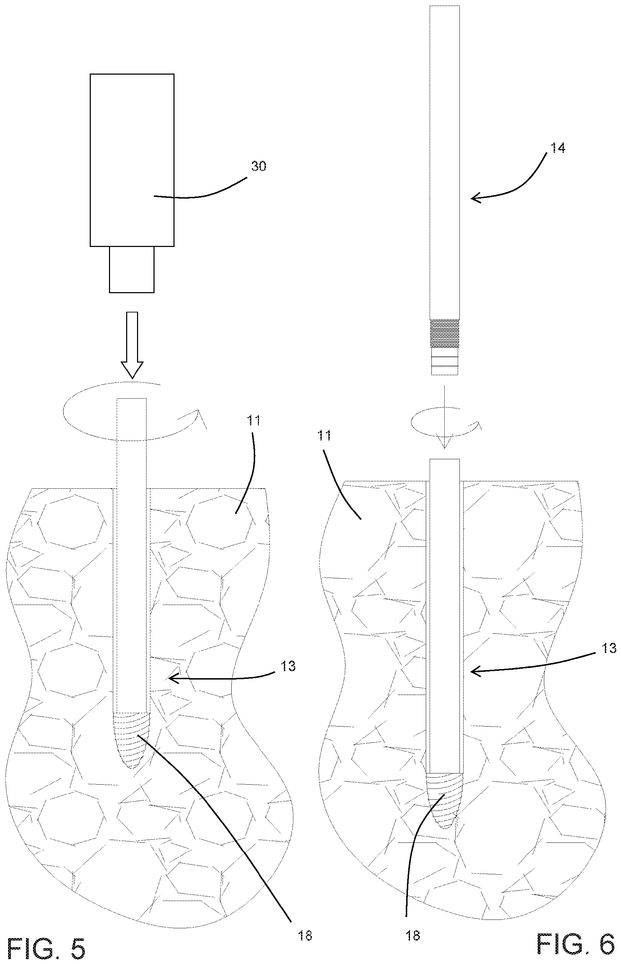

- Figure 5 is a schematic side view of a first step for making the probe according to this invention;
- Figure 6 is a schematic side view of a second step for making the probe according to this invention;

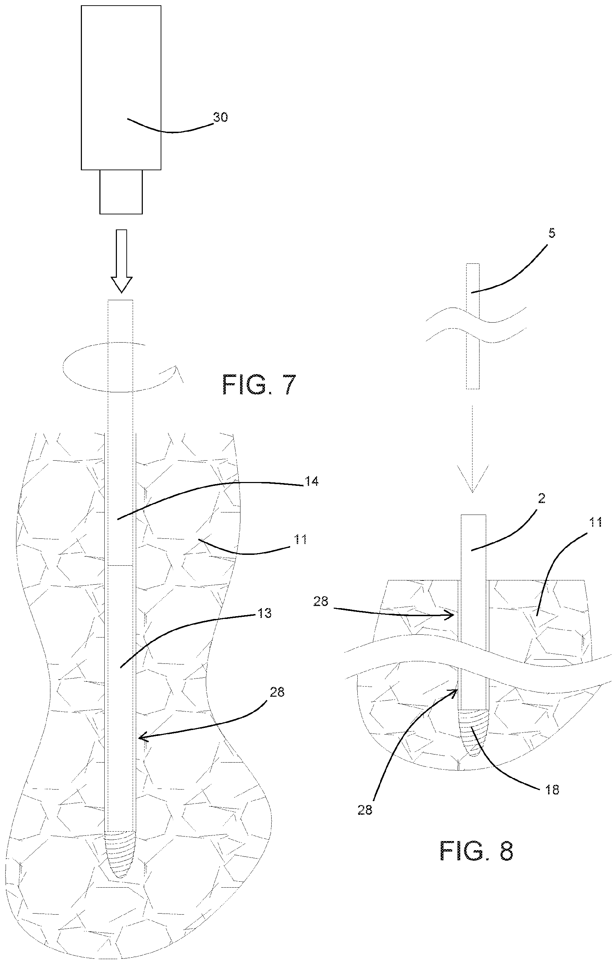

- Figure 7 is a schematic side view of a third step for making the probe according to this invention;
- Figure 8 is a schematic side view with some parts cut away of a fourth step for making the probe according to this invention;
- Figure 9 is an axial section of an example of an outer pipe of a probe made according to this invention;
- Figure 10 is an axial section of an example of a probe made according to this invention that comprises the outer pipe of Figure 9 and that is connected to a geothermal plant;
- Figure 11 is an enlarged view of the detail XI of Figure 9;
- Figure 12 is an enlarged view of the detail XII of Figure 10; and
- Figure 13 is an enlarged view of the detail XIII of Figure 10.

With reference to the above-mentioned figures, the numeral 1 denotes in its entirety a geothermal probe made according to this invention.

Similarly to prior art coaxial geothermal probes, those according to this invention comprise a hollow outer pipe 2 having a fluidtight closed first lower end 3 and an open first upper end 4, and an inner pipe 5 coaxial with the outer pipe 2 and advantageously made of a plastic material such as polyethylene. Between the inner pipe 5 and the outer pipe 2 there is an annular chamber 6, coaxial with the inner pipe 5 (annular in the sense that its cross-sections, relative to a longitudinal axis of the inner pipe 5 and of the outer pipe 2, have an annular shape, in particular the shape of a circular ring). The inner pipe 5 comprises a second lower end 7 that is placed near the first lower end 3 and that is in fluid communication with the annular chamber 6, and a second upper end 8 that is accessible near the first upper end 4.

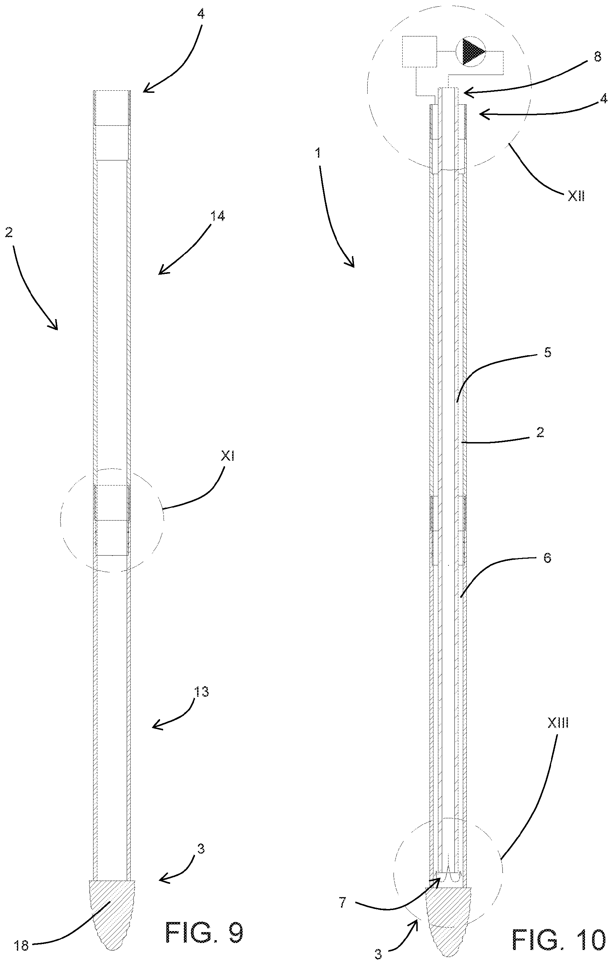

In use, the first upper end 4 and the second upper end 8 are connected to the geothermal circuit 9 in such a way that the pump 10 sends the operating fluid to the inner pipe 5 and in such a way that the operating fluid exchanges heat with the ground 11 as it rises again along the annular chamber 6 and then is fed to the heat pump 12 of the plant again (Figure 9).

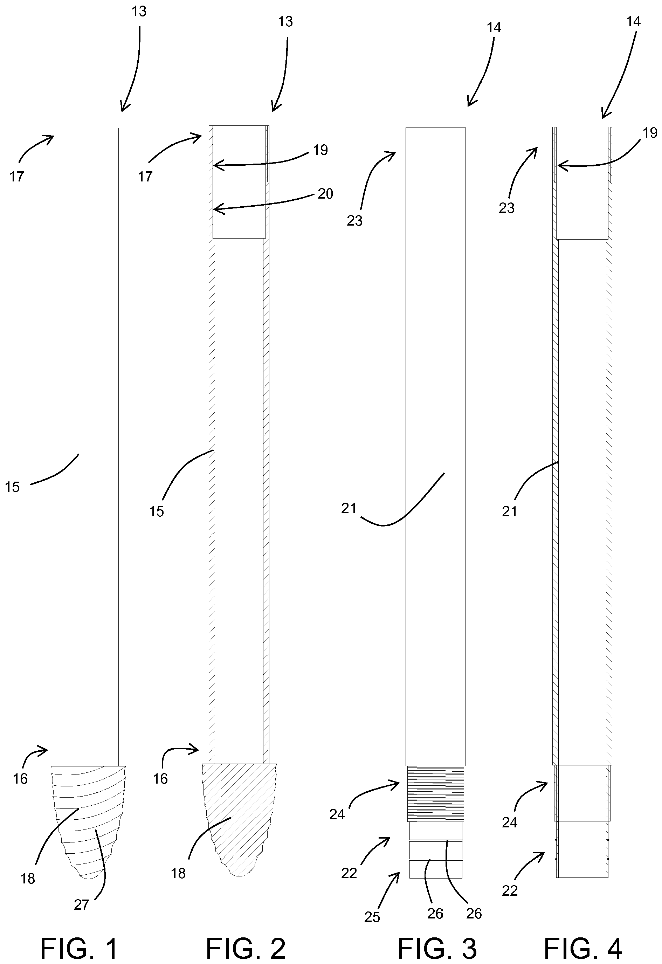

According to this invention, the outer pipe 2 is preferably made of a metal material (advantageously steel) and comprises a head element 13 (Figures 1 and 2) and one or more additional elements 14 (Figures 3 and 4). The head element 13 is the element intended to constitute the first lower end 3 that in use is positioned at the maximum depth in the ground 11, whilst the one or more additional elements 14 are connected in series one after another as far as the surface of the ground 11. In more detail, the head element 13 comprises a first straight tubular body 15 extending from a first end 16 to a second end 17, and a driving head 18 that seals in a liquidtight way the first end 16 to which it is connected. In contrast, the second end 17 is open and comprises at least one first thread 19. In the embodiment illustrated the first thread 19 is a female thread.

Moreover, advantageously, the head element 13 comprises a first sealing band 20 that, in the embodiment illustrated, is constituted of a first cylindrical surface that is positioned adjacent to the first thread 19 on the side towards the driving head 18, and that is facing inwards.

The driving head 18 is advantageously tapered and at its free end comprises a more or less pointed tip.

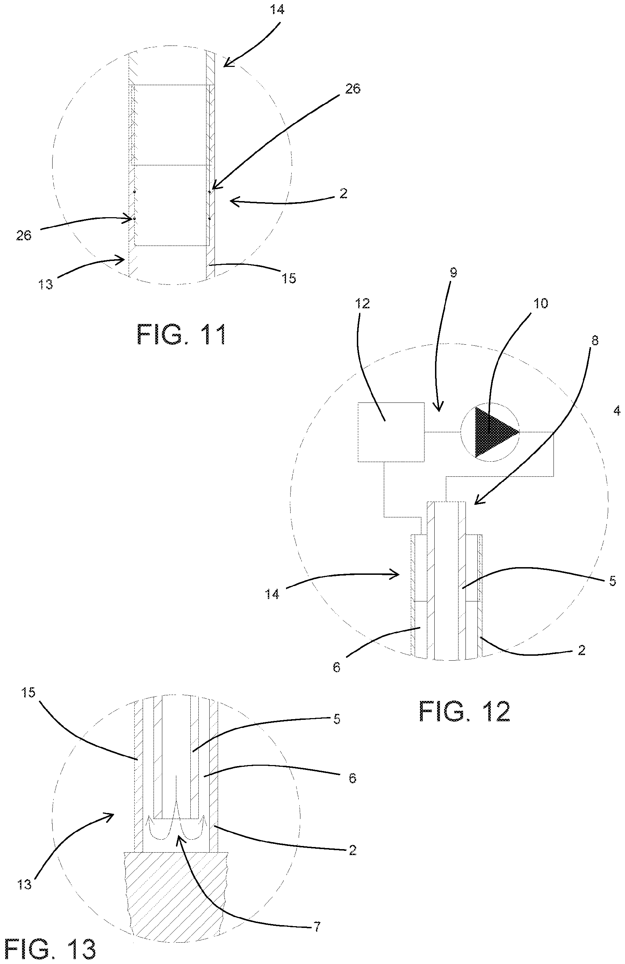

Each additional element 14 comprises a second straight tubular body 21 that extends from a third end 22 to a fourth end 23. Both the third end 22 and the fourth end 23 are open. Moreover, also the fourth end 23 comprises a first thread 19 (identical to that of the second end 17) whilst the third end 22 comprises a second thread 24 that is screwed to the first thread 19 of the head element 13 or of a different additional element 14. In the embodiment illustrated, the second thread 24 is a male thread so that it can be coupled to the first, female thread 19, but the opposite solution may be freely adopted. Moreover, advantageously, the additional element 14 comprises a second sealing band 25 that, in the embodiment illustrated, is constituted of a second cylindrical surface that is adjacent to the second thread 24 on the side opposite that where the fourth end 23 is located, which faces outwards and is provided with suitable seats for one or more sealing O-rings 26 designed to be squeezed between the first sealing band 20 and the second sealing band 25 (Figure 11). In this case too, it is possible to swap over the first sealing band 20 and the second sealing band 25. Advantageously, the driving head 18 externally comprises at least one set of vanes (solution not illustrated) or one helical thread 27 that, preferably, extend in a helix with a direction of screwing opposite to that of the second threads 24 of the third ends 22, in such a way that an axial rotation of the head element 13 corresponds both to a screwing movement of the driving head 18 into the ground 11 and a screwing movement of the first thread 19 of the head element 13 or of an additional element 14 connected to it, into a second thread 24 to which the first thread 19 may be connected. Advantageously, the first tubular body 15 and the second tubular body 21 both have a circular cross-section and have the same maximum external radius (preferably constant), whilst the driving head 18 has a maximum radial projection relative to a longitudinal axis of the first tubular body 15, that is greater than the maximum external radius, so that the penetration of the head in the ground 11 creates a hole with a diameter greater than that of the tubular bodies 15, 21. In fact, in this way, as the various elements advance in the ground 11, the only resistance encountered is that of the ground 11 on which the driving head 18 acts. In contrast, when the driving head 18 has a maximum radial projection, relative to the longitudinal axis of the first tubular body 15, that is less than or equal to the maximum external radius, during advancing in the ground 11 the various tubular bodies 15, 21 laterally scrape on the ground 11, meaning that the friction generated by the ground 11 gradually increases as the outer pipe 2 is inserted in the ground 11.

As regards the method according to this invention, it should first be emphasised that since it is a method that allows the geothermal probes described above to be made, what is described with reference to the probe must also be considered valid for the method and vice versa.

Like all of the methods for making coaxial geothermal probes, even the method according to this invention comprises in general the operating steps of inserting in the ground 11 a hollow outer pipe 2 that comprises a fluidtight closed first lower end 3, and an open first upper end 4, and a step of inserting in the outer pipe 2 an inner pipe 5 that is coaxial with it, leaving between the two pipes an annular chamber 6 that is also coaxial with them. Advantageously, the inner pipe 5 comprises a second lower end 7 that is positioned near the first lower end 3 and in such a way that it is in fluid communication with the annular chamber 6. In contrast, a second upper end 8 of the inner pipe 5 is made accessible near the first upper end 4. Advantageously, the inner pipe 5 is made of plastic material such as polyethylene, and is inserted (manually or in another way) in the outer pipe 2 once the latter has been inserted in the ground 11.

According to this invention, the step of inserting the outer pipe 2 in the ground 11 comprises first the operating steps of preparing a head element 13 and one or more additional elements 14, preferably made of a metal material (advantageously steel). In particular, it comprises the head element 13 comprising a first straight tubular body 15 that extends from a first end 16 to a second end 17 which comprises a first thread 19, and a driving head 18 that seals the first end 16 in a liquidtight way, as well as each additional element 14 comprising a second straight tubular body 21 that extends from a third end 22 to a fourth end 23, the third end 22 and the fourth end 23 both being open. It also comprises also the fourth end 23 comprising a first thread 19 and the third end 22 comprising a second thread 24 that is screwable to the first thread 19 of the head element 13 or of a different additional element 14.

The method also comprises the operating step of driving the head element 13 into the ground 11 using pressure, starting with the driving head 18 and preferably in a vertical direction of insertion. In particular, this invention comprises that step of driving using pressure (like the others described below) being performed by applying to the head element 13 an axial thrust (that is to say, aligned with the longitudinal axis of the first tubular body 15) that is gradually generated by means of a hydraulic actuator 30 which is rested on the second end 17 or made to adhere to the first tubular body 15 and which is continuously fed with a pressurised operating fluid (oil) that guarantees the desired thrust.

The method then comprises screwing the second thread 24 of an additional element 14 to the first thread 19 of the head element 13, creating a fluidtight connection between the head element 13 and the additional element 14, and further driving into the ground 11 using pressure the assembly constituted of the head element 13 and of the additional element 14, in this case too applying an axial thrust to them that is generated by means of a hydraulic actuator 30.

Depending on requirements, that is to say, depending on the length of the geothermal probe 1 to be made, and the lengths of the head element 13 and of the additional elements 14 (the latter are preferably between 1 and 3 metres), the method may optionally comprise performing once or more the steps of screwing the second thread 24 of a further additional element 14 to the free first thread 19 of an additional element 14 already driven into the ground 11 and connected to the head element 13, and further driving into the ground 11 using pressure the assembly constituted of the head element 13 and the additional elements 14 connected to it by screwing, applying an axial thrust to them that is generated by means of a hydraulic actuator 30. Although driving of the outer pipe 2 into the ground 11 may be performed by making it advance exclusively axially, in contrast, in the preferred embodiment during the various steps of driving using pressure, the head element 13 and any additional elements 14 are also made to rotate about their longitudinal axis. For that purpose it is advantageously possible to use a head element 13 equipped with a driving head 18 externally comprising at least one set of vanes or one helical thread 27 of the type described above, and which is substantially screwed into the ground 11 as it advances. Depending on the embodiments, it may alternatively be the case that the head element 13 and any additional elements 14 are made to rotate about their longitudinal axis by means of only the interaction between the set of vanes or the helical thread 27 of the driving head 18 and the ground 11, under the action of the axial thrust acting on them (in others the set of vanes or the helical thread 27 are shaped in such a way that an axial thrust applied to the head element 13 causes its automatic screwing into the ground 11), or that the head element 13 and any additional elements 14 are made to rotate about their longitudinal axis in an active way by means of a specific actuator, for example acting on the tubular body of the element accessible outside the ground 11.

As already indicated, if the driving head 18 has a maximum radial projection relative to a longitudinal axis of the first tubular body 15, that is greater than the maximum external radius, the penetration of the head in the ground 11 creates a hole with a diameter greater than that of the tubular bodies. Moreover, in this case the method comprises, once all of the steps of driving using pressure are complete, a step not illustrated of filling any empty spaces 28 present between the ground 11 and the various tubular bodies present (first tubular body 15 and one or more second tubular bodies). From the above description, it seems clear that the method for making the probe according to this invention may be implemented in any ground 11 in which there are no rock formations present, that is to say, in any ground 11 in which probe driving is possible without drilling.

This invention brings important advantages.

In fact, thanks to this invention, it has been possible to provide a coaxial geothermal probe and a method for making it, which have production costs notably lower than for prior art probes. In fact, probe installation no longer requires expensive deep drilling to be carried out. It is sufficient to have available a device capable of driving using pressure.

It should also be noticed that thanks to this invention it is also possible to use a notably different approach in the design of geothermal probes, replacing traditional very deep probes (more than 100 metres) with a larger number of shorter probes, without substantially increasing the costs, since it is no longer necessary to carry out expensive preliminary drilling operations.

Moreover, thanks to this advantage, it is also possible to use the technology disclosed in types of ground that have rocky inclusions located at a depth of several dozen metres, by making a plurality of relatively short probes instead of one relatively long probe.

Finally, it should be noticed that this invention is relatively easy to produce and that even the cost linked to implementing the invention is not very high. The invention described above may be modified and adapted in several ways without thereby departing from the scope of the inventive concept. All details may be substituted with other technically equivalent elements and the materials used, as well as the shapes and dimensions of the various components, may vary according to requirements.

## Claims

1. A method for making coaxial geothermal probes, comprising the operating steps of:
inserting in the ground (11) a hollow outer pipe (2) comprising a first lower end (3) that is sealed in fluidtight way, and a first upper end (4) that is open;
inserting in the outer pipe (2) an inner pipe (5) coaxial with it, forming an annular chamber (6) coaxial with the inner pipe (5) and located between the inner pipe (5) and the outer pipe (2); the inner pipe (5) comprising a second lower end (7) that is positioned near the first lower end (3) and is in fluid communication with the annular chamber (6) and a second upper end (8) that is accessible near the first upper end (4);
wherein the step of inserting the outer pipe (2) in the ground (11) comprises the operating steps of:
preparing a head element (13) comprising a first straight tubular body (15) extending from a first end (16) to a second end (17), and a driving head (18) that seals the first end (16) in a liquidtight way, the second end (17) comprising a first thread (19);
starting with the driving head (18), driving the head element (13) into the ground (11) using pressure, applying an axial thrust to it that is generated by means of a hydraulic actuator (30);
preparing one or more additional elements (14) each comprising a second straight tubular body (21) extending from a third end (22) to a fourth end (23), the third end (22) and the fourth end (23) both being open, also the fourth end (23) comprising a first thread (19) and the third end (22) comprising a second thread (24) that can be screwed to the first thread (19) of the head element (13) or of a different additional element (14);
screwing the second thread (24) of an additional element (14) to the first thread (19) of the head element (13), creating a fluidtight connection between the head element (13) and the additional element (14);
further driving into the ground (11) using pressure the assembly constituted of the head element (13) and of the additional element (14), applying an axial thrust to them that is generated by means of a hydraulic actuator (30);
optionally performing once or more the steps of screwing the second thread (24) of a further additional element (14) to the free first thread (19) of an additional element (14) already driven into the ground (11) and connected to the head element (13), and further driving into the ground (11) using pressure the assembly constituted of the head element (13) and the additional elements (14) connected to it by screwing, applying an axial thrust to them that is generated by means of a hydraulic actuator (30);
wherein each driving into the ground step is executed without drilling the ground;
**characterised in that**, during the steps of driving using pressure, the head element (13) and any additional elements (14) are also made to rotate about their longitudinal axis;
wherein a head element (13) is used that is equipped with a driving head (18) externally comprising at least one set of vanes or one helical thread (27); wherein a head element (13) is used in which the set of vanes or the helical thread (27) extend in a helix with a direction of screwing opposite to that of the second threads (24) of the third ends (22), in such a way that an axial rotation of the head element (13) corresponds both to a screwing movement of the driving head (18) into the ground (11) and a screwing movement of the first thread (19) of the head element (13) or of an additional element (14) connected to it, into a second thread (24) to which the first thread (19) may be connected;
and wherein the head element (13) and any additional elements (14) are also made to rotate about their longitudinal axis by means of the interaction between the set of vanes or the helical thread (27) of the driving head (18) and the ground (11) under the action of the axial thrust acting on them.

2. The method according to claim 1, wherein the head element (13) and any additional elements (14) are also actively made to rotate about their longitudinal axis by means of a specific actuator.

3. The method according to any of the preceding claims, also comprising after all of the steps of driving using pressure, a step of filling any empty spaces present between the ground (11) and the first tubular body (15) and the one or more second tubular bodies.

4. A coaxial geothermal probe, comprising:
a hollow outer pipe (2) comprising a first lower end (3) that is sealed in fluidtight way and a first upper end (4) that is open; and
an inner pipe (5) coaxial with the outer pipe (2), an annular chamber (6), coaxial with the inner pipe (5), being present between the inner pipe (5) and the outer pipe (2); the inner pipe (5) comprising a second lower end (7) that is positioned near the first lower end (3) and is in fluid communication with the annular chamber (6), and a second upper end (8) that is accessible near the first upper end (4);
wherein the outer pipe (2) comprises:
a head element (13) in turn comprising a first straight tubular body (15) extending from a first end (16) to a second end (17), and a driving head (18) that seals the first end (16) in a liquidtight way, the second end (17) being open and comprising a first thread (19);
one or more additional elements (14) each comprising a second straight tubular body (21) extending from a third end (22) to a fourth end (23), the third end (22) and the fourth end (23) both being open, the fourth end (23) also comprising a first thread (19) and the third end (22) comprising a second thread (24) screwed to the first thread (19) of the head element (13) or of a different additional element (14);
**characterised in that** the driving head (18) externally comprises at least one set of vanes or one helical thread (27) that extend in a helix with a direction of screwing opposite to that of the second threads (24) of the third ends (22), in such a way that an axial rotation of the head element (13) corresponds both to a screwing movement of the driving head (18) into the ground (11) and a screwing movement of the first thread (19) of the head element (13) or of an additional element (14) connected to it, into a second thread (24) to which the first thread (19) may be connected.

5. The geothermal probe according to claim 4, wherein the set of vanes or the helical thread (27) extend in a helix with a direction of screwing opposite to that of the second threads (24) of the third ends (22).

6. The geothermal probe according to any of claims 4 to 5, wherein the first thread (19) has a female shape and the second thread (24) has a male shape.

7. The geothermal probe according to any of claims 4 to 6, wherein the first tubular body (15) and the second tubular body (21) have a circular cross-section and have the same maximum external radius, and wherein the driving head (18) has a maximum radial projection relative to a longitudinal axis of the first tubular body (15) that is greater than the maximum external radius.

## Patentansprüche

1. Ein Verfahren zur Herstellung koaxialer Erdwärmesonden, folgende Arbeitsschritte beinhaltend:
in den Boden (11) ein hohles äußeres Rohr (2), ein erstes unteres Ende (3), das flüssigkeitsdicht versiegelt ist, und ein erstes oberes Ende, (4), das offen ist, umfassend, einzuführen;
in das äußere Rohr (2) ein inneres Rohr (5) koaxial zu diesem einzuführen, dabei eine ringförmige Kammer (6) koaxial zum inneren Rohr (5) und zwischen dem inneren Rohr (5) und dem äußeren Rohr (2) befindlich, bildend; das innere Rohr (5) beinhaltet dabei ein zweites unteres Ende (7), das in der Nähe des ersten unteren Endes (3) positioniert ist und das in Flüssigkeitskommunikation mit der ringförmigen Kammer (6) steht, und ein zweites oberes Ende (8), das in der Nähe des ersten oberen Endes (4) zugänglich ist;
wobei der Schritt des Einführens des äußeren Rohrs (2) in den Boden (11) folgende Arbeitsschritte beinhaltet:
ein Kopfelement (13) vorzubereiten, das einen ersten geraden, rohrförmigen Körper (15) beinhaltet, der sich von einem ersten Ende (16) zu einem zweiten Ende (17) erstreckt, und einen Antriebskopf (18) der das erste Ende (16) flüssigkeitsdicht versiegelt, das zweite Ende (17) beinhaltet dabei ein erstes Gewinde (19);
beginnend mit den Antriebskopf (18) das Kopfelement (13) unter Anwendung von Druck in den Boden (11) einzutreiben, einen axialen Schub darauf ausübend, der mithilfe eines Hydraulikantriebs (30) erzeugt wird;
ein oder mehr zusätzliche Elemente (14) vorzubereiten, von denen jedes einen zweiten geraden, rohrförmigen Körper (21) beinhaltet, der sich von einem dritten Ende (22) zu einem vierten Ende (23) erstreckt, das dritte Ende (22) und das vierte Ende (23) sind dabei beide offen, auch beinhaltet das vierte Ende (23) dabei ein erstes Gewinde (19) und das dritte Ende (22) beinhaltet dabei ein zweites Gewinde (24), das an das erste Gewinde (19) des Kopfelements (13) oder eines anderen, zusätzlichen Elements (14) angeschraubt werden kann;
das zweite Gewinde (24) eines zusätzlichen Elements (14) an das erste Gewinde (19) des Kopfelements (13) anzuschrauben, dabei eine flüssigkeitsdichte Verbindung zwischen dem Kopfelement (13) und dem zusätzlichen Element (14) herstellend;
die Baugruppe, aus dem Kopfelement (13) und dem zusätzliche Element (14) bestehend, weiter in den Boden (11) hineinzutreiben, dabei Druck anwendend, indem ein axialer Schub auf sie ausgeübt wird, der mithilfe eines Hydraulikantriebs (30) erzeugt wird;
gegebenenfalls einmal oder öfter die Schritte des Anschraubens des zweiten Gewindes (24) eines weiteren zusätzlichen Elements (14) an das freie erste Gewinde (19) eines zusätzlichen Elements (14), das bereits in den Boden (11) eingetrieben und mit dem Kopfelement (13) verbunden ist, auszuführen, und die Baugruppe, aus dem Kopfelement (13) und den zusätzlichen Elementen (14), die durch Verschraubung mit ihm verbunden sind, bestehend, weiter in den Boden (11) zu treiben, dabei Druck anwendend, einen axialen Schub auf sie ausübend, der mithilfe eines Hydraulikantriebs (30) erzeugt wird;
wobei jeder Schritt des Eintreibens in den Boden ausgeführt wird, ohne den Boden anzubohren; **gekennzeichnet dadurch, dass** während der Schritte des Eintreibens unter Anwendung von Druck das Kopfelement (13) und jegliche zusätzlichen Elemente (14) ebenfalls dazu gebracht werden, sich um ihre Längsachse zu drehen;
wobei ein Kopfelement (13) verwendet wird, das mit einem Antriebskopf (18) ausgestattet ist, der dabei außen mindestens einen Satz Schaufeln oder ein spiralförmiges Gewinde (27) beinhaltet;
wobei ein Kopfelement (13) verwendet wird, bei dem sich der Satz Schaufeln oder das spiralförmige Gewinde (27) in einer Spirale mit einer entgegen gesetzten Schraubrichtung zu derjenigen der zweiten Gewinde (24) der dritten Enden (22) erstreckt, solcherart, dass eine axiale Drehung des Kopfelements (13) sowohl einer Schraubbewegung des Antriebskopfs (18) in den Boden (11) als auch einer Schraubbewegung des ersten Gewindes (19) des Kopfelements (13) oder eines zusätzlichen damit verbundenen Elements (14), in ein zweites Gewinde (24), mit dem das erste Gewinde (19) verbunden sein könnte, entspricht;
und wobei das Kopfelement (13) und jegliche zusätzlichen Elemente (14) ebenfalls dazu gebracht werden, sich um ihre Längsachse zu drehen, mithilfe der Interaktion zwischen dem Satz Schaufeln oder dem spiralförmigen Gewinde (27) des Antriebskopfs (18) und dem Boden (11) unter Einwirkung des axialen Schubs, der auf sie einwirkt.

2. Das Verfahren nach dem Patentanspruch 1, wobei das Kopfelement (13) und jegliche zusätzlichen Element (14) mithilfe eines bestimmten Antriebs ebenfalls aktiv dazu gebracht werden, sich um ihre Längsachse zu drehen.

3. Das Verfahren nach jedem der vorherigen Patenansprüche, auch, nach allen Schritten des Eintreibens unter Druckanwendung, einen Schritt des Auffüllens jeglicher Leerräume, die sich zwischen dem Boden (11) und dem ersten rohrförmigen Körper (15) und dem einen oder mehreren zweiten rohrförmigen Körpern befinden, beinhaltend.

4. Eine koaxiale Erdwärmesonde, Folgendes beinhaltend:
ein hohles äußeres Rohr (2), ein erstes unteres Ende (3), das flüssigkeitsdicht versiegelt ist, und ein erstes oberes Ende, (4), das offen ist, beinhaltend; und
ein inneres Rohr (5), koaxial zum äußeren Rohr (2), eine ringförmige Kammer (6), koaxial zum inneren Rohr (5), sich zwischen dem inneren Rohr (5) und dem äußeren Rohr (2) befindend; das innere Rohr (5) beinhaltet dabei ein zweites unteres Ende (7), das sich in der Nähe des ersten unteren Endes (3) befindet und in Flüssigkeitskommunikation mit der ringförmigen Kammer (6) steht, und ein zweites oberes Ende (8), das in der Nähe des ersten oberen Endes (4) zugänglich ist;
wobei das äußere Rohr (2) Folgendes beinhaltet:
ein Kopfelement (13), das dabei seinerseits einen ersten geraden, rohrförmigen Körper (15), der sich von einem ersten Ende (16) zu einem zweiten Ende (17) erstreckt, und einen Antriebskopf (18), der das erste Ende (16) auf flüssigkeitsdichte Art versiegelt, beinhaltet, das zweite Ende (17) ist dabei offen und beinhaltet ein erstes Gewinde (19);
ein oder mehr zusätzliche Elemente (14), von denen jedes dabei einen zweiten geraden, rohrförmigen Körper (21) beinhaltet, der sich von einem dritten Ende (22) zu einem vierten Ende (23) erstreckt, das dritte Ende (22) und das vierte Ende (23) sind dabei beide offen, das vierte Ende (23) dabei auch ein erstes Gewinde (19) beinhaltend und das dritte Ende (22) dabei ein zweites Gewinde (24), das am ersten Gewinde (19) des Kopfelements (13) oder eines anderen zusätzlichen Element (14) angeschraubt, beinhaltend;
**gekennzeichnet dadurch, dass** der Antriebskopf (18) außen mindestens einen Satz Schaufeln oder ein spiralförmiges Gewinde (27) beinhaltet, das sich in einer Spirale mit einer Schraubrichtung entgegen gesetzt zu derjenigen der zweiten Gewinde (24) der dritten Enden (22) erstreckt, solcherart, dass eine axiale Drehung des Kopfelements (13) sowohl einer Schraubbewegung des Antriebskopfs (18) in den Boden (11) als auch einer Schraubbewegung des ersten Gewindes (19) des Kopfelements (13) oder eines mit ihm verbundenen zusätzlichen Elements (14) in ein zweites Gewinde (24), mit dem das erste Gewinde (19) verbunden sein könnte, entspricht.

5. Die Erdwärmesonde nach dem Patentanspruch 4, wobei sich der Satz Schaufeln oder das spiralförmige Gewinde (27) in einer Spirale mit einer Schraubrichtung entgegen gesetzt zu derjenigen der zweiten Gewinde (24) der dritten Enden (22) erstreckt.

6. Die Erdwärmesonde nach jedem der Patentansprüche 4 bis 5, wobei das erste Gewinde (19) die Form eines Innengewindes hat und das zweite Gewinde (24) die Form eines Außengewindes hat.

7. Die Erdwärmesonde nach jedem der Patentansprüche 4 bis 6, wobei der erste rohrförmige Körper (15) und der zweite rohrförmige Körper (21) einen kreisförmigen Querschnitt haben und denselben maximalen Außenradius haben, und wobei der Antriebskopf (18) eine maximale radiale Projektion in Bezug zu einer Längsachse des ersten rohrförmigen Körpers (15), die größer als der maximale Außenradius ist, hat.

## Revendications

1. Un procédé de fabrication de sondes géothermiques coaxiales, comprenant les étapes opérationnelles consistant à :
introduire dans le sol (11) un conduit extérieur creux (2) comprenant une première extrémité inférieure (3) qui est fermée de manière étanche aux fluides, et une première extrémité supérieure (4) qui est ouverte ;
introduire dans le conduit extérieur (2) un conduit intérieur (5) coaxial à lui, formant une chambre annulaire (6) coaxiale au conduit intérieur (5) et située entre le conduit intérieur (5) et le conduit extérieur (2) ; le conduit intérieur (5) comprenant une deuxième extrémité inférieure (7) qui est positionnée à proximité de la première extrémité inférieure (3) et est en communication de fluide avec la chambre annulaire (6) et une deuxième extrémité supérieure (8) qui est accessible à proximité de la première extrémité supérieure (4) ;
où l'étape consistant à introduire le conduit extérieur (2) dans le sol (11) comprend les étapes opérationnelles consistant à :
préparer un élément de tête (13) comprenant un premier corps tubulaire (15) rectiligne s'étendant d'une première extrémité (16) à une deuxième extrémité (17), et une tête d'enfoncement (18) qui ferme la première extrémité (16) de manière étanche aux liquides, la deuxième extrémité (17) comprenant un premier filetage (19) ;
en commençant par la tête d'enfoncement (18), enfoncer par pression l'élément de tête (13) dans le sol (11), en lui appliquant une poussée axiale qui est générée au moyen d'un actionneur hydraulique (30) ;
préparer un ou plusieurs éléments supplémentaires (14) comprenant chacun un deuxième corps tubulaire (21) rectiligne s'étendant d'une troisième extrémité (22) à une quatrième extrémité (23), la troisième extrémité (22) et la quatrième extrémité (23) étant toutes les deux ouvertes, la quatrième extrémité (23) comprenant également un premier filetage (19) et la troisième extrémité (22) comprenant un deuxième filetage (24) qui peut être vissé au premier filetage (19) de l'élément de tête (13) ou d'un élément supplémentaire (14) différent ;
visser le deuxième filetage (24) d'un élément supplémentaire (14) au premier filetage (19) de l'élément de tête (13), créant ainsi un raccord étanche aux fluides entre l'élément de tête (13) et l'élément supplémentaire (14) ;
enfoncer encore par pression dans le sol (11) l'ensemble composé de l'élément de tête (13) et de l'élément supplémentaire (14), en leur appliquant une poussée axiale qui est générée au moyen d'un actionneur hydraulique (30) ;
facultativement effectuer une fois ou plus les étapes consistant à visser le deuxième filetage (24) d'un autre élément supplémentaire (14) au premier filetage (19) libre d'un élément supplémentaire (14) déjà enfoncé dans le sol (11) et raccordé à l'élément de tête (13), et à enfoncer encore par pression dans le sol (11) l'ensemble composé de l'élément de tête (13) et des éléments supplémentaires (14) qui lui sont raccordés par vissage, en leur appliquant une poussée axiale qui est générée au moyen d'un actionneur hydraulique (30) ;
où chaque étape d'enfoncement dans le sol est exécutée sans forer le sol ; **caractérisé en ce que**, lors des étapes d'enfoncement par pression, l'élément de tête (13) et les éventuels éléments supplémentaires (14) sont également mis en rotation autour de leur axe longitudinal ;
où un élément de tête (13) est utilisé, qui est muni d'une tête d'enfoncement (18) comprenant extérieurement au moins un ensemble d'aubes ou un filetage hélicoïdal (27) ;
où un élément de tête (13) est utilisé dans lequel l'ensemble d'aubes ou le filetage hélicoïdal (27) s'étendent en hélice avec un sens de vissage opposé à celui des deuxièmes filetages (24) des troisièmes extrémités (22), de manière à ce qu'une rotation axiale de l'élément de tête (13) corresponde à la fois à un mouvement de vissage de la tête d'enfoncement (18) dans le sol (11) et à un mouvement de vissage du premier filetage (19) de l'élément de tête (13) ou d'un élément supplémentaire (14) qui lui est raccordé, dans un deuxième filetage (24) auquel le premier filetage (19) peut être raccordé ;
et où l'élément de tête (13) et les éventuels éléments supplémentaires (14) sont également mis en rotation autour de leur axe longitudinal par l'interaction entre l'ensemble d'aubes ou le filetage hélicoïdal (27) de la tête d'enfoncement (18) et le sol (11) sous l'action de la poussée axiale agissant sur eux.

2. Le procédé selon la revendication 1, dans lequel l'élément de tête (13) et les éventuels éléments supplémentaires (14) sont également mis activement en rotation autour de leur axe longitudinal au moyen d'un actionneur spécifique.

3. Le procédé selon l'une quelconque des revendications précédentes, comprenant également après toutes les étapes d'enfoncement par pression, une étape consistant à remplir les éventuels espaces vides présents entre le sol (11) et le premier corps tubulaire (15) et lesdits un ou plusieurs deuxièmes corps tubulaires.

4. Une sonde géothermique coaxiale, comprenant :
un conduit extérieur creux (2) comprenant une première extrémité inférieure (3) qui est fermée de manière étanche aux fluides et une première extrémité supérieure (4) qui est ouverte ; et
un conduit intérieur (5) coaxial au conduit extérieur (2), une chambre annulaire (6), coaxiale au conduit intérieur (5), étant présente entre le conduit intérieur (5) et le conduit extérieur (2) ; le conduit intérieur (5) comprenant une deuxième extrémité inférieure (7) qui est positionnée à proximité de la première extrémité inférieure (3) et est en communication de fluide avec la chambre annulaire (6), et une deuxième extrémité supérieure (8) qui est accessible à proximité de la première extrémité supérieure (4) ; où le conduit extérieur (2) comprend :
un élément de tête (13) comprenant à son tour un premier corps tubulaire (15) rectiligne s'étendant d'une première extrémité (16) à une deuxième extrémité (17), et une tête d'enfoncement (18) qui ferme la première extrémité (16) de manière étanche aux liquides, la deuxième extrémité (17) étant ouverte et comprenant un premier filetage (19);
un ou plusieurs éléments supplémentaires (14) comprenant chacun un deuxième corps tubulaire (21) rectiligne s'étendant d'une troisième extrémité (22) à une quatrième extrémité (23), la troisième extrémité (22) et la quatrième extrémité (23) étant toutes les deux ouvertes, la quatrième extrémité (23) comprenant également un premier filetage (19) et la troisième extrémité (22) comprenant un deuxième filetage (24) vissé au premier filetage (19) de l'élément de tête (13) ou d'un élément supplémentaire (14) différent ;
**caractérisée en ce que** la tête d'enfoncement (18) comprend extérieurement au moins un ensemble d'aubes ou un filetage hélicoïdal (27) qui s'étendent en hélice avec un sens de vissage opposé à celui des deuxièmes filetages (24) des troisièmes extrémités (22), de manière à ce qu'une rotation axiale de l'élément de tête (13) corresponde à la fois à un mouvement de vissage de la tête d'enfoncement (18) dans le sol (11) et à un mouvement de vissage du premier filetage (19) de l'élément de tête (13) ou d'un élément supplémentaire (14) qui lui est raccordé, dans un deuxième filetage (24) auquel le premier filetage (19) peut être raccordé.

5. La sonde géothermique selon la revendication 4, dans laquelle l'ensemble d'aubes ou le filetage hélicoïdal (27) s'étendent en hélice avec un sens de vissage opposé à celui des deuxièmes filetages (24) des troisièmes extrémités (22).

6. La sonde géothermique selon l'une quelconque des revendications de 4 à 5, dans laquelle le premier filetage (19) a une forme femelle et le deuxième filetage (24) a une forme mâle.

7. La sonde géothermique selon l'une quelconque des revendications de 4 à 6, dans laquelle le premier corps tubulaire (15) et le deuxième corps tubulaire (21) ont une section circulaire et ont le même rayon maximum extérieur, et dans laquelle la tête d'enfoncement (18) a une saillie radiale maximale par rapport à un axe longitudinal du premier corps tubulaire (15) qui est supérieure au rayon maximum extérieur.
